# EUROPÄISCHE PATENTSCHRIFT

(11) **EP 1 144 899 B1**
(45) Veröffentlichungstag und Bekanntmachung des Hinweises auf die Patenterteilung: **14.01.2004**
(21) Anmeldenummer: 00987015.5
(22) Anmeldetag: 24.10.2000
(51) Int. Cl.: F16L 11/12

(54) **DOPPELWANDIGER SCHLAUCH MIT LECKANZEIGEVORRICHTUNG**
DOUBLE WALLED TUBE WITH LEAK DISPLAY DEVICE
TUYAU A DOUBLE PAROI A DISPOSITIF INDICATEUR DE FUITE

(30) Priorität: 23.11.1999 DE 19956198
(43) Veröffentlichungstag der Anmeldung: 17.10.2001
(73) Patentinhaber: Phoenix AG, 21079 Hamburg (DE)
(72) Erfinder: FRIEDERICH, Hans-Werner, 21423 Winsen (DE)
(86) Internationale Anmeldenummer: PCT/DE2000/003738
(87) Internationale Veröffentlichungsnummer: WO 2001/038769

(56) Entgegenhaltungen:
- EP-A- 0 535 997
- EP-A- 0 695 902
- DE-A- 19 821 637
- GB-A- 2 027 838
- US-A- 5 343 738
- PATENT ABSTRACTS OF JAPAN vol. 1998, no. 11, 30. September 1998 (1998-09-30) & JP 10 148280 A (BRIDGESTONE CORP), 2. Juni 1998 (1998-06-02)
- PATENT ABSTRACTS OF JAPAN vol. 1997, no. 02, 28. Februar 1997 (1997-02-28) & JP 08 261861 A (MITSUBISHI HEAVY IND LTD), 11. Oktober 1996 (1996-10-11)

## Beschreibung

Die Erfindung betrifft eine Schlauchanordnung, umfassend wenigstens folgende Bauteile, nämlich:
- einen flexiblen Doppelmantelschlauch, bestehend aus einem Innenschlauch und einem Außenschlauch unter Bildung eines Ringspaltes, der im Bereich der Schlauchenden in einen verbreiterten Zwischenraum übergeht;
- einen Stutzen, der an jedem Ende des Doppelmantelschlauches angebracht ist, wobei der Stutzen aus einem Flansch und einer Armatur besteht, wobei wiederum die Armatur im Endbereich des Außenschlauches und des Zwischenraumes einen ersten Ringwulst sowie zumeist im Endbereich des Innenschlauches einen zweiten Ringwulst umfaßt und zudem mit einer spaltförmigen Kammer versehen ist, die sich zwischen dem Flansch und dem ersten Ringwulst befindet und mit einer Kammerabdeckung umschlossen ist, wobei ferner die Kammer mit dem Zwischenraum in Verbindung steht und in der Kammerabdeckung eine Bohrung angebracht ist; sowie
- einen Signalgeber, der an jedem Schlauchende im Armaturenbereich angebracht ist und dabei jeweils mittels einer Anschlußöffnung mit der Bohrung der Kammerabdeckung in Verbindung steht.

Eine gattungsgemäße Schlauchanordnung mit einem aktivierbaren Melde- bzw. Alarmsystem ist beispielsweise aus den Druckschriften DE 44 02 255 A1 und EP 0 695 902 B1 bekannt, wobei nun die Wirkungsweise kurz beschrieben wird.

Im Falle eines Versagens von dem Innenschlauch nimmt der Außenschlauch den Druck auf, so daß kein Medium nach außen dringen kann. Da der Außenschlauch eine höhere radial Dehnung unter Druck hat als der Innenschlauch, entsteht beim Versagen des Innenschlauches zwischen beiden Schläuchen ein Spalt. Durch diesen Spalt dringt das Medium bis zum Armaturenbereich vor. Der Armaturenbereich ist so gestaltet, daß durch Kanäle das Medium gezielt zu einer Öffnung geführt wird. An dieser Öffnung sind entsprechende Signalgeber angebracht.

Die Signalgeber sind an beiden Schlauchenden im Armaturenbereich angebracht, die nun im Falle des Versagens des Innenschlauches dieses anzeigen. Diese Signalgeber können elektrischer oder mechanischer Art sein. Die elektrischen Signalgeber haben den Nachteil, daß die Kontakte vor Korrosion geschützt werden müssen. Dies ist teuer und sehr aufwendig. Hinzu kommt, daß eine zentrale Empfangsstation vorhanden und besetzt sein muß. Gerade in dem Bereich, wo wechselnde Betreiber tätigt sind, ist dies sehr aufwendig.

Unter Ausschaltung dieser Nachteile zeichnet sich nun die Schlauchanordnung gemäß Kennzeichen des Patentanspruches 1 dadurch aus, daß der erste Signalgeber ein aufblasbarer Behälter und der zweite Signalgeber eine Lampe mit Leuchtstäben ist.

Zweckmäßige Ausgestaltungen der erfindungsgemäßen Schlauchanordnung sind in den Patentansprüchen 2 bis 12 genannt.

Die Erfindung wird nun anhand von Ausführungsbeispielen unter Bezugnahme auf schematische Zeichnungen erläutert. Es zeigen:
- Fig. 1: einen Axialschnitt einer Schlauchanordnung mit Doppelmantelschlauch und Stutzen;
- Fig. 2: einen Axialschnitt des Stutzens mit Details des Armaturenbereiches;
- Fig. 3: einen Radialschnitt des Stutzens gemäß Fig. 2 (Schnitt A-A);
- Fig. 4, 5: Wirkmechanismus des ersten Signalgebers;
- Fig. 6: Wirkmechanismus des zweiten Signalgebers;
- Fig. 7: Schlauchanordnung mit den beiden Signalgebern (nicht aktivierter Zustand);
- Fig. 8: Schlauchanordnung mit den beiden Signalgebern (aktivierter Zustand).

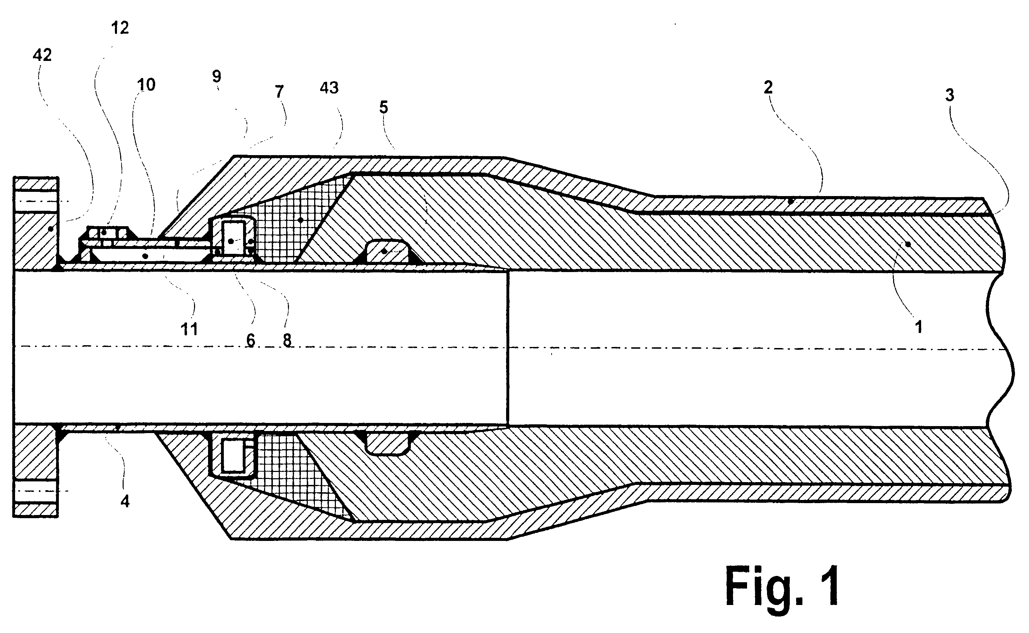

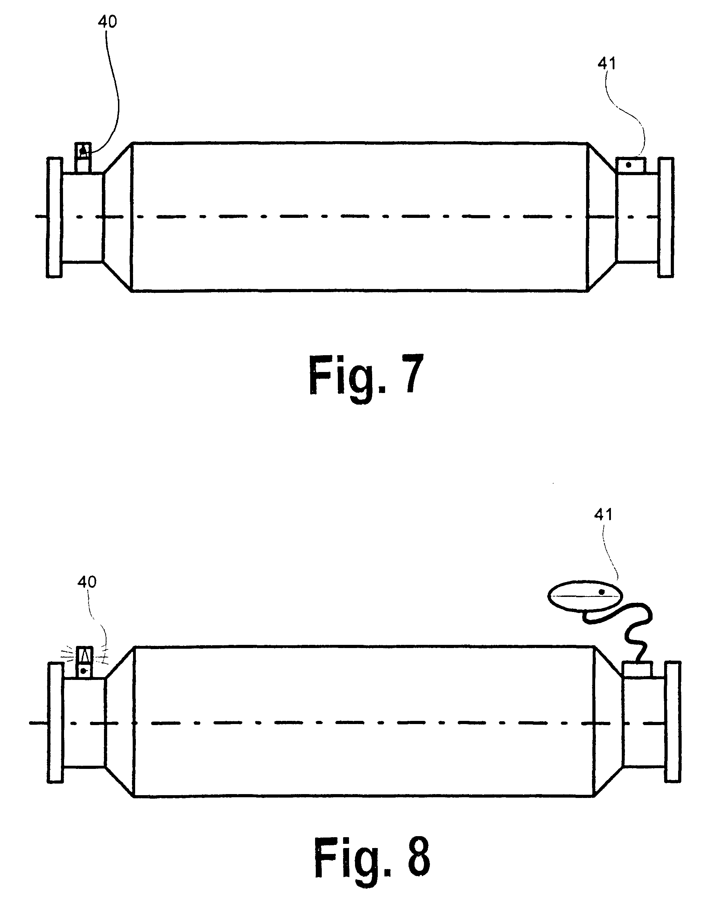

Gemäß Fig. 1 wird der Innenschlauch **1** komplett abgedeckt durch den Außenschlauch 2. Zwischen den beiden Schläuchen **1** und **2** besteht bzw. entsteht ein Ringspalt **3.** Die Schlauchenden sind mit einem Stutzen **4** versehen. An den Schlauchenden sind Signalgeber **40** und **41** angebracht (Fig. 7, 8).

Der Stutzen gemäß Fig. 1 bis 3 hat Ringwulste **5** und **6.** Der Ringwulst **6** ist dabei mit einem ringförmigen Hohlraum **7** versehen. In den Ringwulst **6** werden radial in axialer Richtung auf der schlauchseitigen Seite Bohrungen **8** in gleichmäßigen Abständen angebracht. Auf der flanschseitigen Seite sind nur partiell Bohrungen **9** in axialer Richtung auf dem Umfang verteilt.

Zwischen dem Flansch **42** und dem Wulst **6** ist eine spaltförmige Kammer **10** vorhanden. Diese Kammer ist auf etwa ein Drittel des Stutzenumfanges vorhanden. In der Kammerabdeckung **11** ist eine Bohrung **12** mit Gewinde angebracht. An diese Bohrung werden nun die beiden erfindungsgemäßen Signalgeber angeschlossen.

Zwischen dem Innenschlauch **1** und dem Außenschlauch **2** ist innerhalb des Zwischenraumes **43** ein grobporiges Material ringförmig angeordnet. Dieses grobporige Material kann auch im Ringspalt **3** zwischen den beiden Schläuchen **1** und **2** angebracht sein.

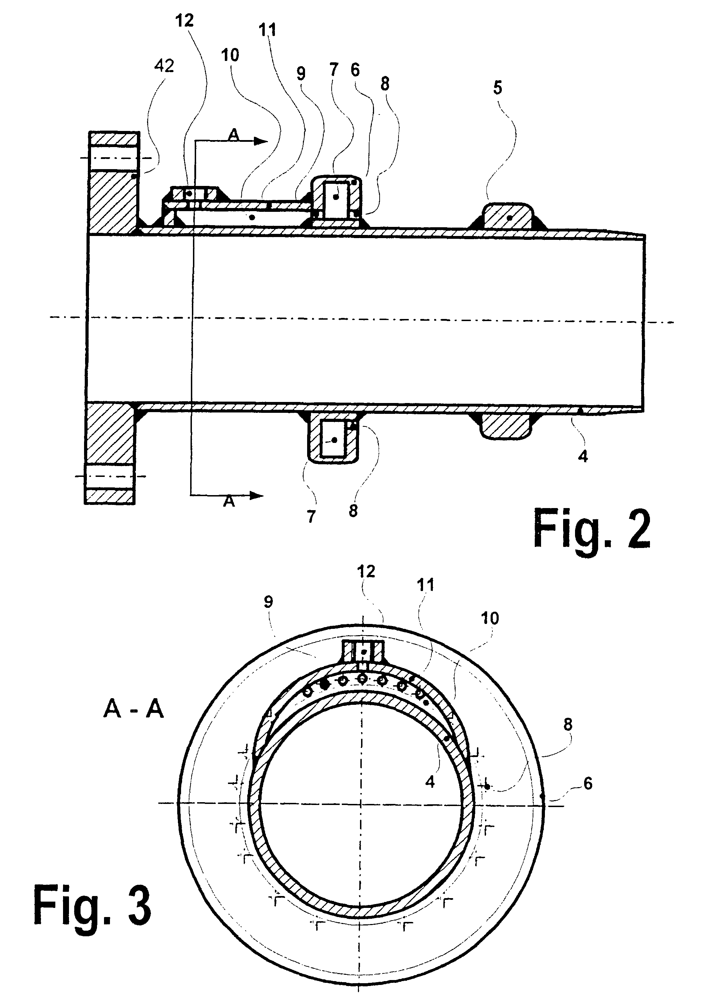

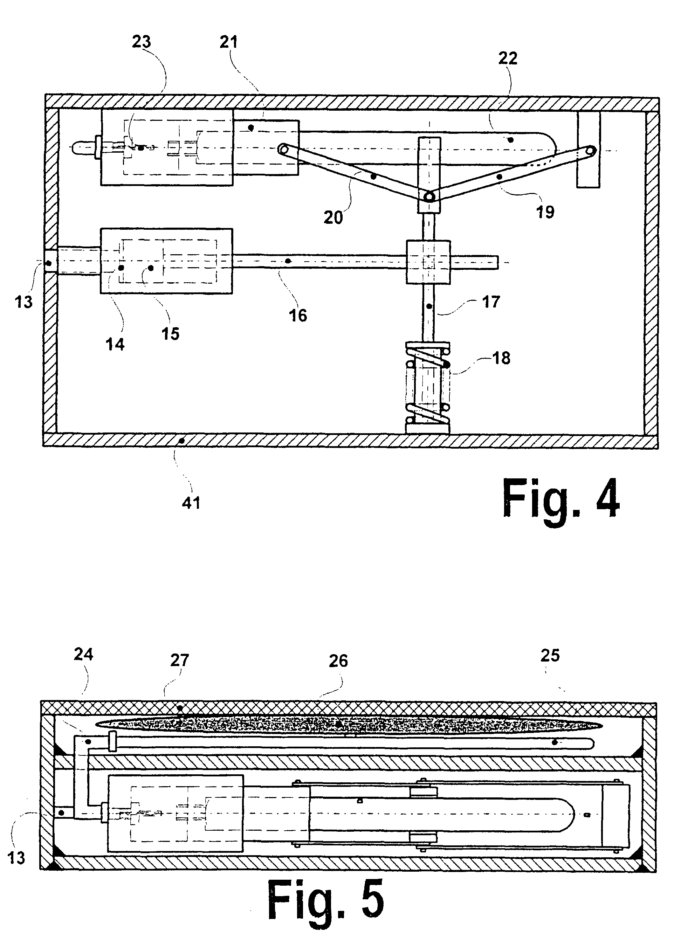

Der erste Signalgeber **41** gemäß Fig. 4 wird über die Anschlußöffnung **13** mit der Bohrung **12** verbunden. Tritt das Medium gemäß Fig. 1 in den Ringspalt **3**, fließt dieses über das grobporige Material im Bereich des Zwischenraumes **43** durch die Bohrungen **8** in den Hohlraum **7** und von da aus durch die Bohrung **9** in die Kammer **10.** Durch die Bohrung **12** und Anschlußöffnung **13** fließt das Medium in einen Zylinder **14.** Hier wird von dem sich aufbauenden Druck ein Kolben **15** nach vorne geschoben. Die Kolbenstange **16** entriegelt die Stange **17.** Die Feder **18** preßt die angewinkelten Stangen **19** und **20** in eine gradlinige Form. Dabei wird ein Kolben **21** nach vorne gedrückt. In diesem Kolben **21** befindet sich eine Gaspatrone **22.** Diese Gaspatrone wird auf einen Stift **23** geschoben. Damit wird die Gaspatrone geöffnet. Durch eine Bohrung in dem Stift **23** strömt das Gas gemäß Fig. 5 in eine Rohrleitung **24.** Von hier aus wird das Gas in einen flexiblen Schlauch **25** geleitet. Durch den Schlauch **25** gelangt das Gas in einen aufblasbaren Behälter **26.** Dadurch, daß dieser Behälter **26** sein Volumen vergrößert und einen Druck auf den Gehäusedeckel **27** ausübt, wird dieser Deckel abgesprengt. Der Behälter **26** kann sich aufblähen. In dem Behälter **26** ist ein Ventil eingebaut, so daß das Gas aus dem Behälter nicht wieder entweichen kann.

Sobald der Behälter **26** sichtbar ist, kann der Betreiber erkennen, daß der Innenschlauch **1** schadhaft ist (Fig. 8).

Das Problem ist, daß solche optischen Anzeichen bei Helligkeit zwar leicht zu erkennen sind, jedoch bei Dunkelheit versagen. Daher wurde ein zweiter Signalgeber **40** entwickelt, der wie folgt funktioniert:

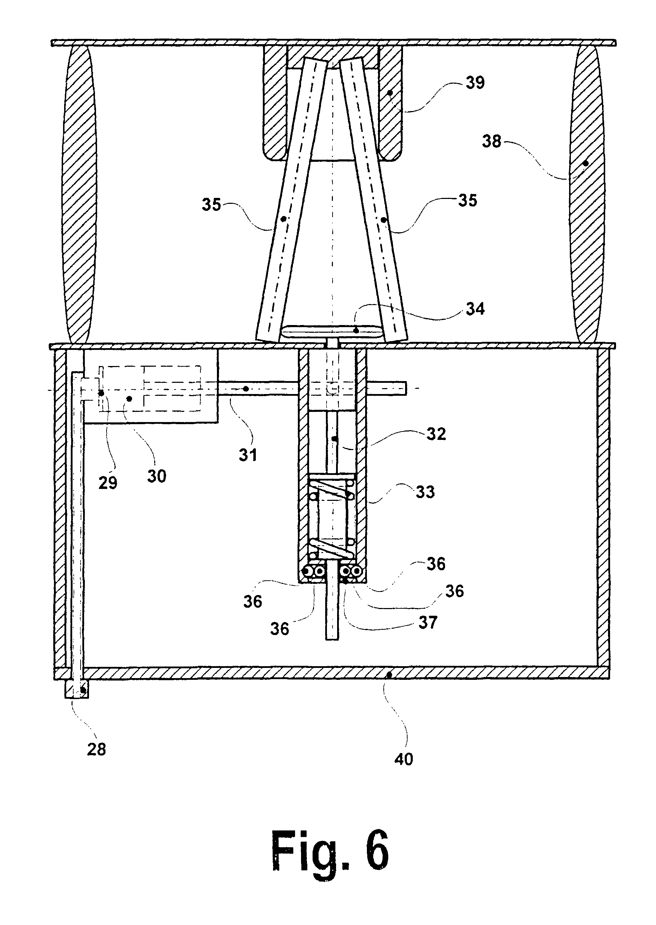

Gemäß Fig. 6 tritt das austretende Medium aus der Bohrung **12** in die Öffnung **28** ein. Hier wird ebenfalls das Medium in einen Zylinder **29** geleitet. Das Medium schiebt den Kolben **30** und die Kolbenstange **31** nach vorne. Dabei wird eine Stange **32** entriegelt und die Feder **33** drückt die Stange mit einem am Ende befestigten Teller **34** nach oben. Dabei werden die angebrachten Leuchtstäbe **35** abgeknickt. Hat der Teller **34** seine oberste Position erreicht, ist die Stange **32** so weit nach obengefahren, daß die Kugeln **36** aus der Bohrung der Scheibe **37**, wo die Kolbenstange **32** durchgelaufen ist, herausfallen. Die Feder drückt die Scheibe **37** nach unten heraus. Dadurch kann der Teller **34** mit der Stange **32** wieder nach unten abgesenkt werden. Die Leuchtstäbe nehmen wieder ihre ursprüngliche Position ein.

Durch den Akt des Abknickens der Leuchtstäbe **35** und des Wiederaufrichtens werden zwei Chemikalien in den Leuchtstäben gemischt, so daß die Leuchtstäbe anfangen, ein Licht auszusenden. Diese Leuchtstäbe sind vom transparentem Material **38** und **39** umgeben, so daß das Licht bei Nacht sichtbar ist.

Mit den beiden erfindungsgemäßen Signalgebern **40** und **41** kann Tag und Nacht das System vom Operater überwacht werden. Das System hat den Vorteil, daß es unabhängig von Energiequellen arbeiten kann.

## Patentansprüche

1. Schlauchanordnung, umfassend wenigstens folgende Bauteile, nämlich:
- einen flexiblen Doppelmantelschlauch, bestehend aus einem Innenschlauch (1) und einem Außenschlauch (2) unter Bildung eines Ringspaltes (3), der im Bereich der Schlauchenden in einen verbreiterten Zwischenraum (43) übergeht;
- einen Stutzen (4), der an jedem Ende des Doppelmantelschlauches angebracht ist, wobei der Stutzen aus einem Flansch (42) und einer Armatur besteht, wobei wiederum die Armatur im Endbereich des Außenschlauches (2) und des Zwischenraumes (43) einen ersten Ringwulst (6) sowie zumeist im Endbereich des Innenschlauches (1) einen zweiten Ringwulst (5) umfaßt und zudem mit einer spaltförmigen Kammer (10) versehen ist, die sich zwischen dem Flansch (42) und dem ersten Ringwulst (6) befindet und mit einer Kammerabdeckung (11) umschlossen ist, wobei ferner die Kammer (10) mit dem Zwischenraum (43) in Verbindung steht und in der Kammerabdeckung (11) eine Bohrung (12) angebracht ist; sowie
- einen Signalgeber (40, 41), der an jedem Schlauchende im Armaturenbereich angebracht ist und dabei jeweils mittels einer Anschlußöffnung (13, 28) mit der Bohrung (12) der Kammerabdeckung (11) in Verbindung steht;
**dadurch gekennzeichnet, daß**
- der erste Signalgeber (41) ein aufblasbarer Behälter (26) und der zweite Signalgeber (40) eine Lampe mit Leuchtstäben (35) ist.

2. Schlauchanordnung nach Anspruch 1, **dadurch gekennzeichnet, daß** der aufblasbare Behälter (26) mittels eines Zylinders (14), umfassend ein System von Kolben (15, 21) und von Stangen (16, 17, 19, 20), ferner eine Feder (18) und eine Gaspatrone (22), aufblasbar ist.

3. Schlauchanordnung nach Anspruch 1 oder 2, **dadurch gekennzeichnet, daß** die Lampe mit Leuchtstäben (35) betrieben wird, in denen Chemikalien gemischt und zum Leuchten gebracht werden.

4. Schlauchanordnung nach einem der Ansprüche 1 bis 3, **dadurch gekennzeichnet, daß** hinter dem ersten Ringwulst (6) innerhalb des Zwischenraumes (43) ein grobporiges Material angebracht ist.

5. Schlauchanordnung nach einem der Ansprüche 1 bis 4, **dadurch gekennzeichnet, daß** der Ringspalt (3) mit einem grobporigen Material versehen ist.

6. Schlauchanordnung nach einem der Ansprüche 1 bis 5, **dadurch gekennzeichnet, daß** die Innenseite des Außenschlauches (2) mit einer Kunststoffolie ausgekleidet ist, wobei die Folie vorzugsweise aus Polyamid, Polyethylen oder Fluorkunststoffen besteht.

7. Schlauchanordnung nach einem der Ansprüche 1 bis 6, **dadurch gekennzeichnet, daß** der erste Ringwulst (6) mit einem ringförmigen Hohlraum (7) versehen ist, der mittels Bohrungen (8, 9) mit dem Ringspalt (10) und dem Zwischenraum (43) in Verbindung steht.

8. Schlauchanordnung nach einem der Ansprüche 1 bis 7, **dadurch gekennzeichnet, daß** die von der Kammerabdeckung (11) umschlossene Kammer (10) über den Umfang der Armatur nur partiell, insbesondere auf etwa ein Drittel des Stutzenumfanges, vorhanden ist.

9. Schlauchanordnung nach Anspruch 7 und 8, **dadurch gekennzeichnet, daß** der erste Ringwulst (6) mit dem ringförmigen Hohlraum (7) auf der schlauchseitigen Seite Bohrungen (8) aufweist, die radial in axialer Richtung in gleichmäßigen Abständen verlaufen, während auf der flanschseitigen Seite Bohrungen (9) vorhanden sind, die in axialer Richtung in die partiell angeordneten Kammer (10) übergehen.

10. Schlauchanordnung nach einem der Ansprüche 1 bis 9, **dadurch gekennzeichnet, daß** im aufblasbaren Behälter (26) ein Ventil eingebaut ist.

11. Schlauchanordnung nach einem der Ansprüche 1 bis 10, **dadurch gekennzeichnet, daß** der aufblasbare Behälter (26) mit einem reflektierenden Material beschichtet ist.

12. Schlauchanordnung nach einem der Ansprüche 1 bis 11, **dadurch gekennzeichnet, daß** die Leuchtstäbe (35) von einem transparenten Material (38, 39) umgeben sind.

## Claims

1. Tube arrangement, comprising at least the following components, namely:
- a flexible double-walled tube, consisting of an inner tube (1) and an outer tube (2) forming an annular gap (3) which runs into a widened intermediate space (43) in the region of the tube ends;
- a connection piece (4) which is attached at each end of the double-walled tube, the connection piece consisting of a flange (42) and a fitting part, the fitting part in turn comprising a first annular projection (6) in the end region of the outer tube (2) and the intermediate space (43) and usually a second annular projection (5) in the end region of the inner tube (1) and also being provided with a slot-shaped chamber (10) which is located between the flange (42) and the first annular projection (6) and is surrounded by a chamber cover (11), the chamber (10) also being connected to the intermediate space (43) and a bore (12) being formed in the chamber cover (11);
- a signalling device (40, 41) which is attached at each tube end in the region of the fitting part and is connected in each case by means of a connecting opening (13, 28) to the bore (12) of the chamber cover (11), **characterised in that**
- the first signalling device (41) is an inflatable container (26) and the second signalling device (40) is a lamp with light bars (35).

2. Tube arrangement according to claim 1, **characterised in that** the inflatable container (26) is inflatable by means of a cylinder (14), comprising a system of systems (15, 21) and rods (16, 17, 19, 20), plus a spring (18) and a gas cartridge (22).

3. Tube arrangement according to claim 1 or 2, **characterised in that** the lamp is operated with light bars (35) in which chemicals are mixed and made to give off light .

4. Tube arrangement according to one of claims 1 to 3, **characterised in that** a coarse-pored material is arranged behind the first annular projection (6) inside the intermediate space (43).

5. Tube arrangement according to one of claims 1 to 4, **characterised in that** the annular gap (3) is provided with a coarse-pored material.

6. Tube arrangement according to one of claims 1 to 5, **characterised in that** the inside of the outer tube (2) is lined with a plastic film, the film preferably consisting of polyamide, polyethylene or fluoroplastics.

7. Tube arrangement according to one of claims 1 to 6, **characterised in that** the first annular projection (6) is provided with an annular cavity (7) which is connected by means of bores (8, 9) to the annular gap (10) and the intermediate space (43).

8. Tube arrangement according to one of claims 1 to 7, **characterised in that** the chamber (10) surrounded by the chamber cover (11) is only present over a part of the circumference of the fitting part, in particular over roughly a third of the circumference of the connection piece.

9. Tube arrangement according to claims 7 and 8, **characterised in that** on the tube side the first annular projection (6) with the annular cavity (7) exhibits bores (8) which run radially in the axial direction with uniform spacing, whereas on the flange side bores (9) are present which in the axial direction run into the partial chamber (10).

10. Tube arrangement according to one of claims 1 to 9, **characterised in that** a valve is fitted in the inflatable container (26).

11. Tube arrangement according to one of claims 1 to 10, **characterised in that** the inflatable container (26) is coated with a reflective material.

12. Tube arrangement according to one of claims 1 to 11, **characterised in that** the light bars (35) are surrounded by a transparent material (38, 39).

## Revendications

1. Agencement de tuyau, comprenant au moins les composants suivants, nommément :
- un tuyau à double paroi, flexible, composé d'un tuyau intérieur (1) et d'un tuyau extérieur (2), avec formation d'un intervalle annulaire (3), se transformant en un espace intermédiaire (43) élargi, dans la zone des extrémités de tuyau;
- une tubulure (4), montée à chaque extrémité du tuyau à double paroi, la tubulure étant formée d'une bride (42) et d'une armature, à son tour l'armature, dans la zone d'extrémité du tuyau extérieur (2) et de l'espace intermédiaire (43), comprenant un premier bourrelet annulaire (6) ainsi que, au moins dans la zone d'extrémité du tuyau intérieur (1), un deuxième bourrelet annulaire (5), et de plus étant munie d'une chambre (10), en forme d'intervalle, qui se trouve entre la bride (42) et le premier bourrelet (6), et est enclos par un recouvrement de chambre (11), la chambre (10) étant en outre en liaison avec l'espace intermédiaire (43), et un perçage (12) est aménagé dans le recouvrement de chambre (11); et
- un transducteur de signal (40, 41), monté à chaque extrémité de tuyau, dans la zone d'armature, et relié alors chaque fois, à l'aide d'une ouverture de raccordement (13, 28) au perçage (12) du recouvrement de chambre (11);
**caractérisé en ce que**
- le premier générateur de signal (41) est un récipient (26) gonflable, et le deuxième générateur de signal (40) est une lampe munie de barres lumineuses (35)

2. Agencement de tuyau selon la revendication 1, **caractérisé en ce que** le récipient (26) gonflable, est susceptible d'être gonflé à l'aide d'un cylindre (14), comprenant un système de piston (15, 21) et de barres (16, 17, 19, 20), en outre comprenant un ressort (18) et une cartouche de gaz (22).

3. Agencement de tuyau selon la revendication 1 ou 2, **caractérisé en ce que** la lampe fonctionne avec des barres lumineuses (35), dans lesquelles sont mélangés des produits chimiques et qui sont portées à luminescence.

4. Agencement de tuyau selon l'une des revendications 1 à 3, **caractérisé en ce qu'**un matériau à pores grossiers est placé derrière le premier bourrelet annulaire (6), à l'intérieur de l'espace intermédiaire (43).

5. Agencement de tuyau selon l'une des revendications 1 à 4, **caractérisé en ce que** l'espace annulaire (3) est muni d'un matériau à pores grossiers.

6. Agencement de tuyau selon l'une des revendications 1 à 5, **caractérisé en ce que** la face intérieure du tuyau extérieur (2) est revêtue d'une feuille de matière synthétique, la feuille étant, de préférence, formée de polyamide, polyéthylène, ou de matières synthétiques fluorées.

7. Agencement de tuyau selon l'une des revendications 1 à 6, **caractérisé en ce que** le premier bourrelet annulaire (6) est muni d'un espace creux (7) annulaire, en liaison, par des perçages (8, 9), avec l'intervalle annulaire (10) et l'espace intermédiaire (43).

8. Agencement de tuyau selon l'une des revendications 1 à 7, **caractérisé en ce que** la chambre (10), enclose par le revêtement de chambre (11), n'est prévue que partiellement sur la périphérie de l'armature, en particulier jusqu'à environ un tiers de la circonférence de la tubulure.

9. Agencement de tuyau selon les revendications 7 et 8, **caractérisé en ce que** le premier bourrelet annulaire (6) avec l'espace creux (7) annulaire présente, sur la face située côté tuyau, des perçages (8) s'étendant radialement sous des espacements réguliers, en direction axiale, tandis que, sur la face côté bride, sont prévus des perçages (9) qui se transforment, en direction axiale, en la chambre (10) implantée partiellement.

10. Agencement de tuyau selon l'une des revendications 1 à 9, **caractérisé en ce qu'**une soupape est incorporée dans le récipient (26) gonflable.

11. Agencement de tuyau selon l'une des revendications 1 à 10, **caractérisé en ce que** le récipient (26) gonflable est revêtu d'un matériau réfléchissant.

12. Agencement de tuyau selon l'une des revendications 1 à 11, **caractérisé en ce que** les barres lumineuses (35) sont entourées par un matériau (38, 39) transparent.
